# EUROPÄISCHE PATENTSCHRIFT

(11) **EP 3 733 516 B1**
(45) Veröffentlichungstag und Bekanntmachung des Hinweises auf die Patenterteilung: **29.05.2024**
(21) Anmeldenummer: 19171623.2
(22) Anmeldetag: 29.04.2019
(51) Int. Cl.: B64D 11/06

(54) **SITZANORDNUNG FÜR EINE FLUGZEUGKABINE, FLUGZEUGKABINE UND FLUGZEUG**
SEAT ASSEMBLY FOR AN AIRCRAFT CABIN, CABIN AND AIRCRAFT
DISPOSITIF SIÈGE POUR UNE CABINE D'AVION, CABINE D'AVION ET AVION

(43) Veröffentlichungstag der Anmeldung: 04.11.2020
(73) Patentinhaber: Deutsche Lufthansa AG, 50679 Köln (DE)
(72) Erfinder: Stratmann, Christoffer, 60314 Frankfurt Main (DE); Wildhaber, Martin, 8311 Brütten (CH); Pearson, Luke, N1 6ND London (GB)
(74) Vertreter: Glawe, Delfs, Moll

(56) Entgegenhaltungen:
- EP-A1- 2 974 961
- EP-A2- 2 574 549
- US-A1- 2010 038 485
- US-A1- 2017 327 232

## Beschreibung

Die Erfindung betrifft eine Sitzanordnung für eine Flugzeugkabine, sowie eine Flugzeugkabine und ein Flugzeug, jeweils mit entsprechender Sitzanordnung.

In Flugzeugen, aber auch in anderen Verkehrsmitteln, besteht grundsätzlich das Bestreben, möglichst viele Sitzplätze für Passagiere in dem dafür zur Verfügung stehenden Raum anzuordnen, um so die Wirtschaftlichkeit eines Flugzeuges oder eines anderen Verkehrsmittels zu erhöhen. Gleichzeitig soll den individuellen Passagieren - insbesondere in den höheren Buchungsklassen, wie bspw. der Business-Class in Flugzeugen - möglichst viel Komfort geboten werden.

Neben verstellbaren Sitzen, die sich auch zu einer ebenen Liegefläche umlegen lassen, wird in höheren Buchungsklassen regelmäßig erwartet, dass auch von einem Gang entferntere Sitze von einem Passagier erreichen lassen, ohne dass dieser seinen jeweiligen Sitznachbarn am Gang stören und/oder übersteigen muss. Diese Anforderung gilt insbesondere auch für den Fall, in dem der dem Gang nähere Sitz zu einer ebenen Liegefläche umgelegt ist, auf welcher der Sitznachbar liegt und ggf. schläft.

Dokument US2017/327232 A1 offenbart eine Sitzanordnung gemäß dem Oberbegriff des Anspruchs 1.

Aus der EP 2 900 555 B1 ist eine Sitzplatzkonfiguration für Business-Class-Sitze an Bord eines Flugzeugs bekannt, bei dem die entlang eines Ganges angeordneten Sitze derart gegenüber die Längsachse des Flugzeugs verschwenkt angeordnet sind, dass auch bei eine Liegebetteinstellung dieser Sitze von dem Gang entfernte, parallel zur Längsachse des Flugzeugs ausgerichtete Sitze erreicht werden können, ohne dass dafür der jeweils dem Gang nahe Sitz überstiegen werden müsste. Durch die beschriebene verschwenkte Anordnung kann die Ausdehnung der betroffenen Sitze in Richtung der Flugzeuglängsachse verringert werden, sodass sich aus der Differenz zwischen dieser reduzierten Längsausdehnung und der Längsausdehnung der nicht-verschwenkten, vom Gang entfernten Sitze in Richtung der Flugzeuglängsachse in jeder Sitzreihe ein ebener Zugang zu dem vom Gang entfernten Sitz ergibt. Die vom Gang entfernten Sitze können dann derart dicht hintereinander angeordnet werden, dass zwischen ihnen in Liegebetteinstellung kein oder nur sehr wenig Zwischenraum vorgesehen ist.

Auch wenn die aus EP 2 900 555 B1 bekannte Sitzplatzanordnung in Bereichen der Flugzeugkabine mit grundsätzlich konstantem Querschnitt vorteilhaft sein mag, hat sich gezeigt, dass es in Bereichen mit sich verjüngendem Querschnitt, wie bspw. im vorderen Bereich der Flugzeugkabine, in dem die Außenwand beginnt zur Flugzeugnase hin zusammenzulaufen, weniger geeignet ist. Bei der bekannten Sitzplatzanordnung müssten nämlich die einzelnen Sitze schmaler ausgeführt werden, um zwischen Gang und Kabinenwand angeordnet werden zu können. Das ist aber aufgrund des damit einhergehenden sinkenden Sitzplatzkomforts nachteilig.

Alternativ kann grundsätzlich auch auf den dem Gang näheren Sitz verzichtet werden. Auf der Längsausdehnung eines im Prinzip parallel zur Längsachse des Flugzeugs, in diesem Fall aber entlang der Wand der Flugzeugkabine angeordneten Sitzes ist dann aber tatsächlich nur ein Sitz angeordnet. Der zwischen dem fraglichen Sitz und dem Gang bestehende Platz kann nicht sinnvoll und insbesondere nicht für die Unterbringung eines weiteren Passagiers genutzt werden, was letztendlich eine schlechte Raumausnutzung in der Flugzeugkabine bedeutet.

Aufgabe der vorliegenden Erfindung ist es, eine Sitzanordnung für eine Flugzeugkabine, sowie eine Flugzeugkabine und ein Flugzeug zu schaffen, bei dem die Nachteile aus dem Stand der Technik nicht mehr oder nur noch in vermindertem Umfang auftreten.

Gelöst wird diese Aufgabe durch eine Sitzanordnung gemäß Anspruch 1, eine Flugzeugkabine gemäß Anspruch 6 und ein Flugzeug gemäß Anspruch 9. Vorteilhafte Weiterbildungen sind Gegenstand der abhängigen Ansprüche.

Demnach betrifft die Erfindung eine Sitzanordnung für eine Flugzeugkabine gemäß Anspruch 1 Weiterhin betrifft die Erfindung eine Flugzeugkabine mit wenigstens einem Gang und einer Mehrzahl entlang des wenigstens einen Ganges in Reihen angeordneten Sitzen, wobei wenigstens ein Teil der Sitze entsprechend einer erfindungsgemäßen Sitzanordnung angeordnet sind, sowie ein Flugzeug mit einer erfindungsgemäßen Flugzeugkabine.

Zunächst werden einige in Zusammenhang mit der Erfindung verwendete Begriffe erläutert.

Ein "Gang" ist ein grundsätzlich durch Sitze auf wenigstens einer Seite, regelmäßig aber zu beiden Seiten gebildeter Korridor an Bord eines Verkehrsmittels, wie bspw. eines Flugzeuges. In regelmäßig auf Kurz- und Mittelstrecken eingesetzten Schmalrumpfflugzeugen ist in der Regel nur ein Gang bzw. Kabinengang vorgesehen ("single aisle"), während grundsätzlich für die Langstrecke konzipierten Großraumflugzeugen häufig zwei parallele Kabinengänge aufweisen ("twin aisle").

Ein Gang gilt in einem Abschnitt als "gerade", wenn die Mittelachse des Gangs in diesem Abschnitt keine Krümmung aufweist. Etwas gilt als "parallel zum Gang" ausgerichtet, wenn dessen Achse oder Richtung im Wesentlichen parallel zu der Mittelachse in dem jeweils benachbarten Gangabschnitt ist. Eine Ausrichtung "schräg zum Gang" liegt dann vor, wenn zwischen der fraglichen Achse oder Richtung und der Mittelachse in dem jeweils benachbarten Gangabschnitt ein - vorzugsweise spitzer - Winkel vorliegt.

Die "Richtung", in die ein Sitz weist, entspricht der Blickrichtung einer ordnungsgemäß auf dem Sitz sitzenden Person mit einem gerade nach vorn gerichteten Blick. In einer horizontalen Ebene verläuft diese Richtung ausgehend von der Rückenlehne des Sitzes in der Regel senkrecht dazu zur Sitzvorderkante hin. Bei Sitzen, die sich zwischen einer Sitzkonfiguration und einer Liegeflächenkonfiguration verstellen lassen, verläuft die Richtung des Sitzes im Regelfall parallel zu der durch die Länge der Liegefläche definierten Längsachse. Wird das Kopfteil der Liegefläche in Liegeflächenkonfiguration durch die Kopfstütze des Sitzes in Sitzkonfiguration gebildet, verläuft die Richtung des Sitzes entlang der Längsachse vom Kopf- zum Fußende der Liegefläche in Liegeflächenkonfiguration.

Ein Sitz weist dann "in eine vorgegebene Richtung eines Ganges", wenn die Richtung des Sitzes im Wesentlichen parallel oder in einem - vorzugsweise spitzen - Winkel zu einer entlang der Mittelachse des Ganges vorgegebenen Richtung weist. Bei bekannten Verkehrsflugzeugen weisen bspw. zumindest die Sitze der Economy-Class grundsätzlich in eine Richtung parallel zu derjenigen Richtung des oder der dazwischenliegenden Gänge, deren Orientierung der Flugrichtung entspricht.

Sind in einer Sitzreihe auf einer Seite des Ganges zwei Sitze angeordnet, so wird derjenige Sitz unmittelbar am Gang als "gangnäherer Sitz" bezeichnet, womit der zweite, daneben angeordnete Sitz ein "gangentfernterer Sitz" ist. Der gangnähere Sitz ist demnach zwischen dem gangentfernteren Sitz und dem Gang angeordnet.

Ein Sitz ist von einem benachbarten Sitz oder dem Gang "weggedreht", wenn die Richtung des Sitzes von der Richtung des benachbarten Sitzes oder des Gangs derart schräg ist, dass grundsätzlich eine ordnungsgemäß auf dem Sitz sitzenden Person dem benachbarten Sitz oder dem Gang zumindest leicht den Rücken zuwendet.

Der Erfindung liegt die Erkenntnis zugrunde, dass ausgehend von einer vorteilhaften bekannten Sitzanordnung für Bereiche mit konstanter Breite auf einer Seite eines Ganges, insbesondere bei geringerer Breite im Bereich der ersten Sitzreihe eine von der übrigen Anordnung der Sitze vollständig abweichende erfindungsgemäße Anordnung eines einzelnen Sitzes in der ersten Sitzreihe vorteilhaft ist. Indem die Längsachse des Sitzes in der ersten Sitzreihe derart schräg zum Gang ausgerichtet ist, dass der Sitz vom Gang und somit in die entgegengesetzte Richtung als die gangnahen Sitze in der dahinterliegenden zweiten Sitzreihen weggedreht ist, kann der Sitz wenigstens so komfortable ausgestaltet werden, wie die dahinterliegenden Sitze, weist aber aufgrund der schrägen Anordnung in Längsrichtung des Ganges eine geringere Ausdehnung auf, als bei einfacher Übernahme der Konfiguration des gangentfernteren Sitzes der zweiten Sitzreihe gegeben wäre. Der Platzbedarf der ersten und zweiten Sitzreihe kann so gegenüber dem Stand der Technik reduziert werden.

Es ist bevorzugt, wenn sich der Sitz der ersten Sitzreihe und der gangentferntere Sitz der zweiten Sitzreihe in Liegeflächenkonfiguration in Gangrichtung derart überschneiden, dass ein Teil der Liegefläche des Sitzes der ersten Sitzreihe zwischen dem Gang und einem Teil der Liegefläche des gangentfernteren Sitzes der zweiten Sitzreihe angeordnet ist. Durch eine entsprechende Überschneidung in Längsrichtung kann der Platzbedarf der ersten und zweiten Sitzreihe weiter reduziert werden. Der Sitz der ersten Sitzreihe kann dabei derart vom Gang weggedreht sein, dass er sich über die gesamte Breite zwischen Gang und Kabinenwand erstreckt, sodass die Längsausdehnung dieses Sitzes insbesondere in Liegeflächenkonfiguration minimal ist.

Auch bei einer solchen Konfiguration ist es weiterhin bevorzugt, dass der Abstand der ersten und zweiten Sitzreihe und/oder ein Versatz des gangnäheren Sitzes der zweiten Sitzreihe gegenüber des gangentfernteren Sitzes der zweiten Sitzreihe in Richtung des Ganges so gewählt ist, dass in Liegeflächenkonfiguration sämtlicher Sitze ein ebener Zugang zum gangentfernteren Sitz der zweiten Sitzreihe gegeben ist. Selbst bei der erfindungsgemäßen Ausgestaltung des Sitzes der ersten Sitzreihe sollen der Komfort und insbesondere der freie Zugang zum gangentfernteren Sitz der zweiten Sitzreihe, wie er auch aus dem Stand der Technik bekannt ist, weiterhin gewährleistet sein. Die Breite des Zugangs zum gangentfernteren Sitz der zweiten Sitzreihe ist dabei grundsätzlich von den Faktoren des Maßes der Schrägstellung des gangnäheren Sitzes, dem Abstand zwischen erster und zweiter Sitzreihe und einem evtl. Versatz der des gangnäheren Sitzes der zweiten Sitzreihe gegenüber des gangentfernteren Sitzes der zweiten Sitzreihe in Richtung des Ganges abhängig. Der fragliche Versatz bedeutet letztendlich, dass die Sitzflächen der beiden Sitze der zweiten Sitzreihe in Sitzkonfiguration nicht auf einer gemeinsamen Linie senkrecht zur Richtung des Ganges angeordnet sind, sondern dass in der Regel der gangnähere Sitz gegenüber dem gangentfernteren Sitz entgegen der Blickrichtung weiter hinten angeordnet ist.

Es ist bevorzugt, wenn für den Sitz der ersten Sitzreihe ein zum Sitz hin offenes Ablageelement derart angeordnet ist, dass sich der Sitz in Liegeflächenkonfiguration in das Ablageelement hinein erstreckt und in Sitzkonfiguration zwischen Sitz und Ablageelement ein freier Fußraum mit einer Länge von wenigstens 30 cm besteht. Das Ablageelement ist also so angeordnet und ausgestaltet, dass sich dadurch grundsätzlich keine Komfortbeeinflussung für den Passagier auf dem Sitz der ersten Sitzreihe ergibt. Durch den vorgegebenen Mindestabstand ist ausreichend Fußraum in der Sitzkonfiguration gegeben und die Länge der Liegefläche in Liegeflächenkonfiguration nicht eingeschränkt wird. Insbesondere können die Füße eines auf dem Sitz in Liegeflächenkonfiguration liegenden Passagiers von dem Ablageelement aufgenommen werden. Indem ein Ablageelement vorgesehen ist, dass das Ablageelement überbaut und somit der Raum unmittelbar oberhalb des Ablageelementes anderweitig genutzt werden.

Aufgrund des vorgegebenen Mindestabstandes ergibt sich regelmäßig auch die Möglichkeit, den Raum zwischen Ablageelemente und Gang bzw. Kabinenwand für andere Zwecke zu nutzen, da zumindest wenn der Bereich zwischen Ablageelemente und Gang lediglich in Richtung senkrecht zum Gang genutzt wird, durch den vorgegebenen Mindestabstand zwischen Ablageelement und Sitz ein ebener Zugang zu dem Sitz gewährleistet bleibt. Insbesondere kann das Ablageelement des Sitzes der ersten Sitzreihe wenigstens teilweise in ein den Passagierbereich begrenzendes Wandelement eingelassen sein, wobei das Wandelement vorzugsweise so ausgestaltet und/oder angeordnet ist, dass ein ebener Zugang zum Sitz der ersten Sitzreihe gegeben ist. Letzteres ist bspw. dann regelmäßig gegeben, wenn sich das Wandelement senkrecht zur Richtung des Gangs erstreckt und bspw. bündig an dem Ablageelement abschließt. Der Bereich jenseits des Wandelementes kann dann für andere Zwecke, bspw. eine Bordküche, genutzt werden, wobei dieser lediglich durch das Ablageelement leicht eingeschränkt ist.

Es ist bevorzugt, wenn entlang des Gangs eine dritte Sitzreihe entsprechend zu der zweiten Sitzreihe vorgesehen ist. "Entsprechend" bedeutet in diesem Zusammenhang, dass die grundsätzliche Ausgestaltung der dritten Sitzreihe derjenigen der zweiten Sitzreihe entspricht, also insbesondere zwei Sitze umfasst, bei denen der gangentferntere Sitz im Wesentlichen parallel zum Gang ausgerichtet ist, während der gangnähere Sitz von dem benachbarten gangentfernteren Sitz weggedreht ist, ohne dass diese bspw. hinsichtlich der diversen Maße und Winkel identisch sein müssten. Es kann aber vorteilhaft sein, wenn die zweite und dritte Sitzreihe identisch sind, da sich dadurch regelmäßig die Herstellungskosten gegenüber Individualanfertigungen für jede Sitzreihe reduzieren lassen.

Der Abstand der zweiten und dritten Sitzreihe und/oder ein Versatz des gangnäheren Sitzes der dritten Sitzreihe gegenüber des gangentfernteren Sitzes der dritten Sitzreihe in Richtung des Ganges ist dabei vorzugsweise gewählt, dass in Liegeflächenkonfiguration sämtlicher Sitze ein ebener Zugang zum gangentfernteren Sitz der dritten Sitzreihe gegeben ist.

Zur Erläuterung der erfindungsgemäßen Flugzeugkabine sowie des erfindungsgemäßen Flugzeuges wird auf die vorstehenden Ausführungen verwiesen.

Die Erfindung wird nun anhand einer vorteilhaften Ausführungsform unter Bezugnahme auf die beigefügte Zeichnung beispielhaft beschriebe. Es zeigt:

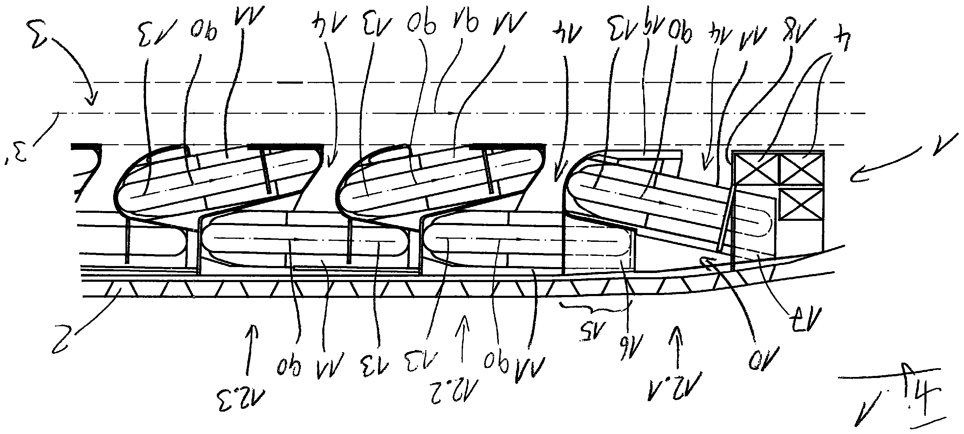

- Figur 1:: eine schematische Darstellung einer Sitzanordnung in der Kabine eines Flugzeugs.

In Figur 1 ist schematisch ein Teil des Kabinenlayouts einer Flugzeugkabine 1 eines nicht weiter dargestellten Flugzeugs in Draufsicht gezeigt. Der dargestellte Teil zeigt die Sitzanordnung 10 der Sitze 11 der ersten drei Sitzreihen 12.1, 12.2, 12.3 im Bereich, in dem sich die Kabine 1 bereits zur Flugzeugnase hin verjüngt, zwischen einer Wand 2 der Flugzeugkabine 1 und einem dazu benachbarten, durch gestrichelte Linien angedeuteten Gang 3. Auf der nicht näher dargestellten Seite des Ganges 3 können weitere Sitze (11), bei einem Großflugzeug ggf. unterbrochen durch einen weiteren Gang (3), angeordnet sein.

Sämtlich Sitze 11 der dargestellten Sitzanordnung 10 lassen sich zwischen einer Sitzkonfiguration und einer Liegeflächenkonfiguration verstellen, wobei sich die Sitze 11 in Figur 1 alle in der Liegeflächenkonfiguration befinden. Wie anhand der entlang der jeweiligen Längsachse 13 der Sitze von Kopf- zu Fußende eingezeichneten Richtungen 90 weisen sämtliche Sitze 11 der Sitzanordnung in diejenige Richtung 91 des Ganges 3, die entlang dessen Mittelachse 3' in Richtung der Flugzeugnase und somit in Flugrichtung weist.

In der zweiten und dritten Sitzreihe 12.2, 12.3 - die sich beide in der Sitzanordnung grundsätzlich entsprechen und vergleichbar zum Stand der Technik gemäß EP 2 900 555 B1 ausgestaltet sind - sind jeweils zwei Sitze 11 vorgesehen. Die Längsachse 13 des gangentferntere Sitzes 11 ist dabei im Wesentlichen parallel zur Längsachse 3` des Gangs 3 ausgerichtet. Der gangnähere Sitz 11 der zweiten und dritten Sitzreihe 12.2, 12.3 ist gegenüber dem jeweiligen gangentfernteren Sitz 11 entgegen der Richtung 91 versetzt angeordnet und derart von dem gangentfernteren Sitz 11 weggedreht, dass die Längsachse 13 der gangnäheren Sitze 11 der zweiten und dritten Sitzreihe 12.2, 12.3 schräg zur Längsachse 3` des Gangs 3 verlaufen. Der Abstand zweiter und dritter Sitzreihe 12.2, 12.3 voneinander sowie der Versatz der Sitze 11 in jeder der Sitzreihen 12.2, 12.3 ist dabei so gewählt, dass ein ebener Zugang 14 zum gangentfernteren Sitz 11 der dritten Sitzreihe 12.3 ergibt.

In der ersten Sitzreihe 12.1 ist hingegen nur ein Sitz 11 vorgesehen, der sich zwischen einer Sitzkonfiguration und der in Figur 1 gezeigten Liegeflächenkonfiguration verstellen lässt. Auch dieser Sitz 11 weist grundsätzlich in dieselbe Richtung 91 wie die dahinterliegenden Sitze 11 der zweiten und dritten Sitzreihe 12.2, 12.3. Allerdings ist die Längsachse 13 des Sitzes 11 in der ersten Sitzreihe 12.1 grundsätzlich anders gegenüber der Längsachse 3` des Ganges angeordnet, nämlich derart schräg, dass der Sitz 11 vom Gang 3 weggedreht ist.

Der Sitz 11 der ersten Sitzreihe 12.1 ist so angeordnet, dass er sich in der dargestellten Liegeflächenkonfiguration in Längsrichtung des Ganges 3 in dem durch die Bezugsziffer 15 angedeuteten Bereich mit dem gangentfernteren Sitz 11 der zweiten Sitzreihe 12.2 überschneidet. Dabei ist der Abstand zwischen der ersten und der zweiten Sitzreihe 12.1, 12.2 so gewählt, dass sich ein ebener Zugang 14 zum gangentfernteren Sitz 11 der zweiten Sitzreihe 12.2 ergibt, auch wenn sich sämtliche Sitze 11 der Sitzanordnung 10, wie dargestellt, in der Liegeflächenkonfiguration befinden. Der unmittelbar neben dem Sitz 11 der ersten Sitzreihe 12.1 befindliche Teil des gangentfernteren Sitzes 11 der zweiten Sitzreihe 12.2 ist mit einer Abdeckung 16 versehen, die als Ablage für den Sitz 11 in der ersten Sitzreihe 12.1 dient.

Der Sitz 11 in der ersten Sitzreihe 12.1 umfasst weiterhin ein zum Sitz 11 hin offenes Ablageelement 17, in den sich der Fußbereich des Sitzes 11 in Liegeflächenkonfiguration hineinerstreckt. Gleichzeitig ist das Ablageelement 17 derart weit vom Sitz 11 in Sitzkonfiguration entfernt, dass sich ein freier Fußraum mit einer Länge von wenigstens 30 cm in Richtung der Längsachse 13 des Sitzes 11 ergibt.

Das Ablageelement 17 ist dabei in ein Wandelement 18 eingelassen, wobei zwischen Wandelement 18 und der Sitzverkleidung 19 im Kopfbereich des Sitzes 11 ein ausreichender Abstand zu Schaffung eines ebenen Zugangs 14 zum Sitz 11 der ersten Sitzreihe 12.1 besteht.

Das Wandelement 18 trennt den eigentlichen Passagierbereich umfassend die Sitzanordnung 10 von einem Küchenbereich. Durch die in Figur 1 gezeigte, erfindungsgemäße Ausgestaltung der Sitzanordnung 10 ist es dabei möglich, den Bereich zwischen Ablageelement 17 und Gang 3 noch zu nutzen, bspw. als von der von der Sitzanordnung 10 abgewandten Seite zugänglichen Abstellbereich für einen Trolley 4.

## Patentansprüche

1. Sitzanordnung (10) für eine Flugzeugkabine mit einem im wesentlichen geraden Gang, wobei die Sitzanordnung eine erste, zweite und dritte Sitzreihe (12.1, 12.2, 12.3) umfasst, die auf einer Seite entlang des Gangs angeordnet sind, wobei die zweite und dritte Sitzreihe (12.2, 12.3) jeweils zwei grundsätzlich in eine gemeinsame vorgegebene Richtung (91) des Ganges (3) weisende Sitze (11) umfassen, die jeweils zwischen einer Sitzkonfiguration und einer Liegeflächenkonfiguration mit einer durch die Länge der Liegefläche definierten Längsachse (13) verstellbar sind, und die Längsachse (13) des gangentfernteren Sitzes (11) der zweiten und dritten Sitzreihe (12.2, 12.3) im Wesentlichen parallel zum Gang (3) ausgerichtet ist, während die Längsachse (13) des gangnäheren Sitzes (11) der zweiten und dritten Sitzreihe (12.2, 12.3) vom derart schräg zum Gang (3) ausgerichtet ist, dass der gangnähere Sitz (11) von dem gangentfernteren Sitz (11) derselben Sitzreihe (12.2, 12.3) weggedreht ist, **dadurch gekennzeichnet, dass**
die erste Sitzreihe (12.1) nur einen zwischen einer Sitzkonfiguration und einer Liegeflächenkonfiguration verstellbaren Sitz (11) umfasst, der in die gemeinsame Gangrichtung (91) der Sitze (11) der zweiten und dritten Sitzreihe (12.2, 12.3) weist und dessen Längsachse (13) derart schräg zum Gang (3) ausgerichtet ist, dass der Sitz (11) vom Gang (3) weggedreht ist, und wobei
sich der Sitz (11) der ersten Sitzreihe (12.1) und der gangentferntere Sitz (11) der zweiten Sitzreihe (12.2) in Liegeflächenkonfiguration in Gangrichtung (91) derart überschneiden, dass ein Teil der Liegefläche des Sitzes (11) der ersten Sitzreihe (12.1) zwischen dem Gang (3) und einem Teil der Liegefläche des gangentfernteren Sitzes (11) der zweiten Sitzreihe (12.2) angeordnet ist.

2. Sitzanordnung gemäß einem der vorhergehenden Ansprüche, **dadurch gekennzeichnet, dass**
der Abstand der ersten und zweiten Sitzreihe (12.1, 12.2) und/oder ein Versatz des gangnäheren Sitzes (11) der zweiten Sitzreihe (12.2) gegenüber des gangentfernteren Sitzes (11) der zweiten Sitzreihe (12.2) in Richtung (91) des Ganges (3) so gewählt ist, dass in Liegeflächenkonfiguration sämtlicher Sitze (11) ein ebener Zugang (14) zum gangentfernteren Sitz (11) der zweiten Sitzreihe (12.2) gegeben ist.

3. Sitzanordnung gemäß einem der vorhergehenden Ansprüche, **dadurch gekennzeichnet, dass**
für den Sitz (11) der ersten Sitzreihe (12.1) ein zum Sitz (11) hin offenes Ablageelement (17) derart angeordnet ist, dass sich der Sitz (11) in Liegeflächenkonfiguration in das Ablageelement (17) hinein erstreckt und in Sitzkonfiguration zwischen Sitz (11) und Ablageelement (17) ein freier Fußraum mit einer Länge von wenigstens 30 cm besteht.

4. Sitzanordnung gemäß einem der vorhergehenden Ansprüche, **dadurch gekennzeichnet, dass**
die dritte Sitzreihe (12.3) identisch zu der zweiten Sitzreihe (12.2) ausgebildet ist.

5. Sitzanordnung gemäß Anspruch 1,
**dadurch gekennzeichnet, dass**
der Abstand der zweiten und dritten Sitzreihe (12.2, 12.3) und/oder ein Versatz des gangnäheren Sitzes (11) der dritten Sitzreihe (12.3) gegenüber des gangentfernteren Sitzes (11) der dritten Sitzreihe (12.3) in Richtung (91) des Ganges (3) so gewählt ist, dass in Liegeflächenkonfiguration sämtlicher Sitze (11) ein ebener Zugang (14) zum gangentfernteren Sitz (11) der dritten Sitzreihe (12.3) gegeben ist.

6. Flugzeugkabine (1) mit wenigstens einem Gang (3) und einer Mehrzahl entlang des wenigstens einen Ganges in Reihen (12.1, 12.2, 12.3) angeordneten Sitzen (11),
**dadurch gekennzeichnet, dass**
wenigstens ein Teil der Sitze (11) entsprechend einer Sitzanordnung (10) gemäß einem der vorhergehenden Ansprüche angeordnet sind.

7. Flugzeugkabine nach Anspruch 6,
**dadurch gekennzeichnet, dass**
die Flugzeugkabine (1) im Bereich der ersten Sitzreihe (12.1) gegenüber dem Bereich der zweiten Sitzreihe (12.2) verjüngt oder sich verjüngend ist und wenigstens eine Sitzanordnung (10) gemäß den Ansprüchen 1 bis 6 zwischen einem Gang (3) und der Wand (2) der Flugzeugkabine (1) angeordnet ist.

8. Flugzeugkabine nach Anspruch 6 oder 7,
**dadurch gekennzeichnet, dass**
das Ablageelement (17) des Sitzes (11) der ersten Sitzreihe (12.1) wenigstens teilweise in ein den Passagierbereich begrenzendes Wandelement (18) eingelassen ist, wobei das Wandelement (18) vorzugsweise so ausgestaltet und/oder angeordnet ist, dass ein ebener Zugang (14) zum Sitz der ersten Sitzreihe (12.1) gegeben ist.

9. Flugzeug umfassend eine Flugzeugkabine,
**dadurch gekennzeichnet, dass**
die Flugzeugkabine (1) gemäß einem der Ansprüche 6 bis 8 ausgebildet ist.

10. Flugzeug nach Anspruch 9,
**dadurch gekennzeichnet, dass**
die für die Ausrichtung der Sitze (11) vorgegebene gemeinsame Richtung (91) des Ganges (3) der Flugrichtung entspricht.

## Claims

1. Seat arrangement (10) for an aircraft cabin with a substantially straight aisle, the seat arrangement comprising a first, second and third seat row (12.1, 12.2, 12.3) which are arranged on one side along the aisle, the second and third seat row (12.2, 12.3) each comprising two seats (11) which point fundamentally in a common specified direction (91) of the aisle (3) and can each be adjusted between a seat configuration and a bed surface configuration with a longitudinal axis (13) defined by the length of the bed surface, and the longitudinal axis (13) of that seat (11) of the second and third seat row (12.2, 12.3) which is further away from the aisle being oriented substantially parallel to the aisle (3), while the longitudinal axis (13) of that seat (11) of the second and third seat row (12.2, 12.3) which is closer to the aisle is oriented obliquely with respect to the aisle (3) in such a way that the seat (11) which is closer to the aisle is turned away from that seat (11) of the same seat row (12.2, 12.3) which is further away from the aisle, **characterized in that**
the first seat row (12.1) comprises only one seat (11) which can be adjusted between a seat configuration and a bed surface configuration, points in the common aisle direction (91) of the seats (11) of the second and third seat row (12.2, 12.3), and the longitudinal axis (13) of which is oriented obliquely with respect to the aisle in such a way that the seat (11) is turned away from the aisle (3), and
the seat (11) of the first seat row (12.1) and that seat (11) of the second seat row (12.2) which is further away from the aisle intersecting in the aisle direction (91) in the bed surface configuration in such a way that a part of the bed surface of the seat (11) of the first seat row (12.1) is arranged between the aisle (3) and a part of the bed surface of that seat (11) of the second seat row (12.2) which is further away from the aisle.

2. Seat arrangement according to one of the preceding claims,
**characterized in that**
the spacing of the first and second seat row (12.1, 12.2) and/or an offset of that seat (11) of the second seat row (12.2) which is closer to the aisle with respect to that seat (11) of the second seat row (12.2) which is further away from the aisle is selected in the direction (91) of the aisle (3) in such a way that, in the bed surface configuration of all the seats (11), there is level access (14) to that seat (11) of the second seat row (12.2) which is further away from the aisle.

3. Seat arrangement according to either of the preceding claims,
**characterized in that**
a storage element (17) which is open towards the seat (11) for the seat (11) of the first seat row (12.1) is arranged in such a way that, in the bed surface configuration, the seat (11) extends into the storage element (17) and, in the seat configuration, there is a free footwell with a length of at least 30 cm between the seat (11) and the storage element (17).

4. Seat arrangement according to one of the preceding claims,
**characterized in that**
the third seat row (12.3) is of identical configuration to the second seat row (12.2).

5. Seat arrangement according to Claim 1,
**characterized in that**
the spacing of the second and third seat row (12.2, 12.3) and/or an offset of that seat (11) of the third seat row (12.3) which is closer to the aisle with respect to that seat (11) of the third seat row (12.3) which is further away from the aisle is selected in the direction (91) of the aisle (3) in such a way that, in the bed surface configuration of all the seats (11), there is level access (14) to that seat (11) of the third seat row (12.3) which is further away from the aisle.

6. Aircraft cabin (1) with at least one aisle (3) and a plurality of seats (11) which are arranged in rows (12.1, 12.2, 12.3) along the at least one aisle,
**characterized in that**
at least one part of the seats (11) are arranged in accordance with a seat arrangement (10) according to one of the preceding claims.

7. Aircraft cabin according to Claim 6,
**characterized in that**,
in the region of the first seat row (12.1), the aircraft cabin (1) is tapered or tapering with respect to the region of the second seat row (12.2), and at least one seat arrangement (10) according to Claims 1 to 6 is arranged between an aisle (3) and the wall (2) of the aircraft cabin (1).

8. Aircraft cabin according to Claim 6 or 7,
**characterized in that**
the storage element (17) of the seat (11) of the first seat row (12.1) is recessed at least partially into a wall element (18) which adjoins the passenger region, the wall element (18) preferably being configured and/or arranged in such a way that there is level access (14) to the seat of the first seat row (12.1).

9. Aircraft comprising an aircraft cabin,
**characterized in that**
the aircraft cabin (1) is configured according to one of Claims 6 to 8.

10. Aircraft according to Claim 9,
**characterized in that**
the common direction (91) of the aisle (3) which is specified for the orientation of the seats (11) corresponds to the direction of flight.

## Revendications

1. Agencement de sièges (10) pour une cabine d'avion ayant un couloir sensiblement droit, l'agencement de sièges comprenant une première, une deuxième et une troisième rangées de sièges (12.1, 12.2, 12.3) disposées d'un côté le long du couloir, la deuxième et la troisième rangées de sièges (12.2, 12.3) comprenant chacune deux sièges (11) alignés essentiellement dans une direction commune prédéfinie (91) du couloir (3), qui sont chacun réglables entre une configuration de siège et une configuration de couchette avec un axe longitudinal (13) défini par la longueur de la couchette, et l'axe longitudinal (13) du siège (11) le plus éloigné du couloir de la deuxième et de la troisième rangées de sièges (12.2, 12.3) est orienté essentiellement parallèlement au couloir (3), tandis que l'axe longitudinal (13) du siège (11) le plus proche du couloir de la deuxième et de la troisième rangées de sièges (12.2, 12.3) est orienté en biais par rapport au couloir (3) de telle sorte que le siège (11) le plus proche du couloir est tourné à l'opposé du siège (11) le plus éloigné du couloir de la même rangée de sièges (12.2, 12.3), **caractérisé en ce que**
la première rangée de sièges (12.1) comprend un seul siège (11) réglable entre une configuration de siège et une configuration de couchette, qui est orienté dans la direction d'allée commune (931) des sièges (11) de la deuxième et de la troisième rangées de sièges (12.2, 12.3) et dont l'axe longitudinal (13) est orienté obliquement par rapport au couloir (3) de telle sorte que le siège (11) soit tourné à l'opposé du couloir (3), et
le siège (11) de la première rangée de sièges (12.1) et le siège (11) de la deuxième rangée de sièges (12.2) le plus éloigné du couloir se chevauchent dans la configuration de couchette dans la direction du couloir (91) de telle sorte qu'une partie de la couchette du siège (11) de la première rangée de sièges (12.1) soit disposée entre le couloir (3) et une partie de la couchette du siège (11) de la deuxième rangée de sièges (12.2) le plus éloigné du couloir.

2. Agencement de sièges selon l'une des revendications précédentes,
**caractérisé en ce que**
la distance entre la première et la deuxième rangées de sièges (12.1, 12.2) et/ou un décalage du siège le plus proche du couloir (11) de la deuxième rangée de sièges (12.2) par rapport au siège le plus éloigné du couloir (11) de la deuxième rangée de sièges (12.2) dans la direction (91) du couloir (3) est choisie de telle sorte qu'en configuration de couchette de tous les sièges (11), il y ait un accès de plain-pied (14) au siège (11) de la deuxième rangée de sièges (12.2) le plus éloigné du couloir.

3. Agencement de sièges selon l'une des revendications précédentes,
**caractérisé en ce que**
pour le siège (11) de la première rangée de sièges (12.1), un élément de rangement (17) ouvert vers le siège (11) est disposé de telle sorte que le siège (11) s'étende dans l'élément de rangement (17) en configuration de couchette et qu'en configuration de siège, il existe entre le siège (11) et l'élément de rangement (17) un espace libre pour les pieds d'une longueur d'au moins 30 cm.

4. Agencement de sièges selon l'une des revendications précédentes,
**caractérisé en ce que**
la troisième rangée de sièges (12.3) est identique à la deuxième rangée de sièges (12.2).

5. Agencement de sièges selon la revendication 1,
**caractérisé en ce que**
la distance entre la deuxième et la troisième rangées de sièges (12.2, 12.3) et/ou un décalage du siège (11) de la troisième rangée de sièges (12.3) le plus proche du couloir par rapport au siège (11) de la troisième rangée de sièges (12.3) le plus éloigné du couloir dans la direction (91) du couloir (3) est choisie de telle sorte qu'en configuration de couchette de tous les sièges (11), il y ait un accès (14) de plain-pied au siège (11) de la troisième rangée de sièges (12.3) le plus éloigné du couloir.

6. Cabine d'avion (1) ayant au moins un couloir (3) et une pluralité de sièges (11) disposés en rangées (12.1, 12.2, 12.3) le long dudit au moins un couloir,
**caractérisé en ce que**
au moins certains des sièges (11) sont disposés selon un agencement de sièges (10) selon l'une des revendications précédentes.

7. Cabine d'avion selon la revendication 6,
**caractérisée en ce que**
la cabine d'avion (1) est effilée ou se rétrécit au niveau de la première rangée de sièges (12.1) par rapport à la zone de la deuxième rangée de sièges (12.2) et au moins un agencement de sièges (10) selon les revendications 1 à 6 est disposé entre un couloir (3) et la paroi (2) de la cabine d'avion (1).

8. Cabine d'avion selon la revendication 6 ou la revendication 7,
**caractérisée en ce que**
l'élément de rangement (17) du siège (11) de la première rangée de sièges (12.1) est au moins partiellement encastré dans un élément de paroi (18) délimitant la zone réservée aux passagers, l'élément de paroi (18) étant de préférence conçu et/ou disposé de manière à permettre un accès (14) de plain-pied au siège de la première rangée de sièges (12.1).

9. Avion comprenant une cabine d'avion,
**caractérisé en ce que**
la cabine d'avion (1) est conçue selon l'une des revendications 6 à 8.

10. Avion selon la revendication 9,
**caractérisé en ce que**
la direction commune (91) du couloir (3), prévue pour l'alignement des sièges (11), correspond à la direction de vol.
